# EUROPEAN PATENT SPECIFICATION

(11) **EP 4 553 564 B1**
(45) Date of publication and mention of the grant of the patent: **11.11.2026**
(21) Application number: 25166607.9
(22) Date of filing: 04.10.2012
(51) Int. Cl.: G02B 27/01

(54) **OPTICAL WAVEGUIDE AND DISPLAY DEVICE**
OPTISCHER WELLENLEITER UND ANZEIGEVORRICHTUNG
GUIDE D'ONDES OPTIQUE ET DISPOSITIF D'AFFICHAGE

(30) Priority: 04.10.2011 GB 201117029
(43) Date of publication of application: 14.05.2025
(62) Document number(s) of the earlier application(s) in accordance with Art. 76 EPC: 12778777.8 / 2 764 394
(73) Proprietor: Snap Inc., Santa Monica, CA 90405 (US)
(72) Inventor: MASON, Stephen Paul, Rochester (GB)
(74) Representative: Mathys & Squire

(56) References cited:
- WO-A1-2010/122330
- WO-A1-99/52002

## Description

This invention relates to an optical waveguide and a display device. In particular it is relevant to display devices in which image bearing light is injected into a waveguide, is expanded in two orthogonal dimensions to form a visible image and is released from the waveguide.

A known form of waveguide for use in a display device has been described in an earlier international patent application by the present Applicant, published as WO 2010/119240, as will now be described with reference to Figure 4. The waveguide in that case comprises an input diffraction region 42 for coupling an input pupil 44 of image-bearing light into the waveguide for propagation by total internal reflection. The input pupil 44 is directed towards a reflective surface 46 where it is reflected towards a turning diffraction region 48. The turning diffraction region 48 expands the pupil in a first dimension 50 through multiple interactions with the region 48 and turns it towards an output diffraction region 52. The output diffraction region 52 expands the pupil in a second dimension 54 and outputs the image-bearing light from the waveguide with an exit pupil 56. The use of the reflecting surface 46 allows the input diffraction region 42 and the turning diffraction region 48 to be formed by a single grating 58. The reflecting surface 46 may be omitted, although in that case each of the diffraction regions will be formed by separate gratings.

The orientation of the grooves of the grating 58 are inclined at an angle of 60° to the x-axis so that image-bearing light incident on the input region 42 is diffracted and propagated to the reflective surface 46 and thence reflected so that the chief ray propagates and is incident on the grooves of the turning region 48 at 60° to the normal to the grooves (see inset A). The light is partially diffracted and expanded in a first dimension (here the x-dimension) and propagates through the waveguide to the output low diffraction efficiency (2% to 20%) grating 52 having its orientation (grooves) lying in the x-direction. The diffracted rays are incident normally on this grating (see inset B) and are partially diffracted out of the waveguide, the partial diffraction expanding the pupil in a second dimension, here the y-dimension, resulting in the exit pupil 56.

Typical implementations of the waveguide designs described above use a grating 52, 58 carried on the surface of the waveguide, or a grating of a profile such as a blazed grating profile 60 as used for the turning region 48 in the earlier patent application, shown in Figure 5, to optimise the diffraction efficiency. Analysis has shown that the angled turning diffraction region 48, as required to direct the light towards the output diffraction region 52, will typically rotate the polarisation of both the diffracted light directed towards the output diffraction region 52 and also the light which continues to propagate making multiple further interactions to expand the input pupil in one dimension.

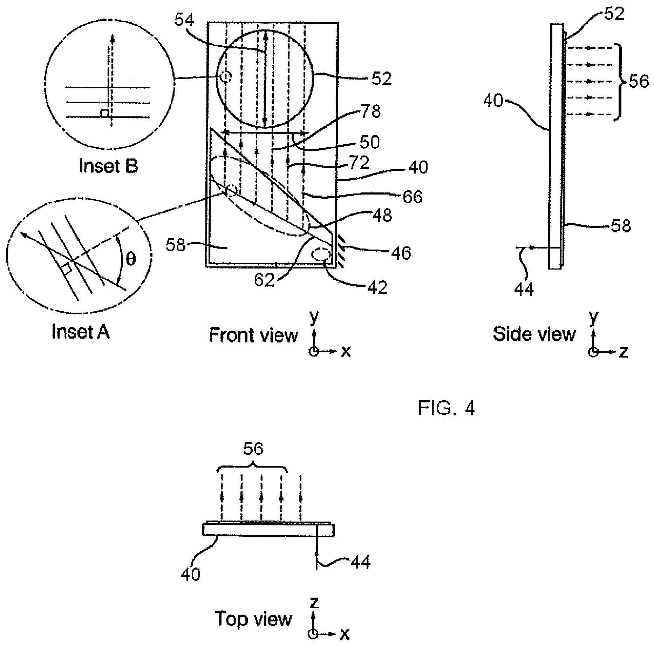

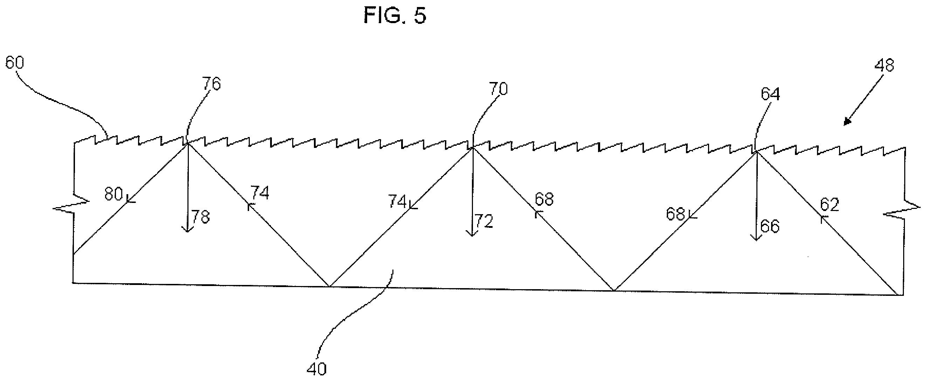

Referring to Figure 5, a chief input ray 62 is shown directed towards the turning diffraction region 48 from the input diffraction region 42 (not shown in Figure 5), whether or not via a reflecting surface 46. The input ray 62 has a first angle of polarisation, that is, changes to the state of polarisation of the light may be identified with reference to an angle associated with the state of polarisation of the input ray 62 even though the light is not necessarily plane-polarised. At a first interaction 64 with the turning region 48, a portion 66 of the light is directed towards the output diffraction region 52 (not shown in Figure 5) and a portion 68 of the light continues to propagate along the turning region 48. At the first interaction 64, the angle of polarisation of both of the portions 66, 68 is rotated in one direction, for example a clockwise direction, and therefore the angles of polarisation of light rays 66, 68 are different from the angle of polarisation of the input ray 62. At a second interaction 70 with the grating 48, a portion 72 of the propagating ray 68 is directed towards the output diffraction region 52 and a portion 74 of the light continues to propagate along the turning region 48. At the second interaction 70, the angle of polarisation of both the portions 72, 74 is rotated further in the same direction, for example a clockwise direction. Consequently, the angle of polarisation of the rays, 72, 74 is typically different from the angles of polarisations of both the input ray 62 and the propagating ray 68. At a third interaction 76 with the grating 48, a portion 78 of the propagating ray 74 is directed towards the output diffraction region 52 and a portion 80 of the light continues to propagate along the turning region. At the third interaction 76, the angle of polarisation of both the portions 78, 80 are rotated further in the same direction, for example a clockwise direction. Consequently, the angle of polarisation of the rays 78, 80 are typically different from the angles of polarisation of the input ray 62, the propagating ray 68 and the propagating ray 74. Multiple further interactions will occur between propagating rays and the grating 48, although only three interactions are shown. Accordingly, the angles of polarisation of the rays 66, 72 78 directed towards the output diffraction region 52 are typically different from each other. In the example shown in Figure 4, the output diffraction region 52 is sensitive to the polarisation of light such that a ray having one angle of polarisation will be more optimally diffracted towards a viewer than a ray having another angle of polarisation. The rays 66, 72, 78 constitute expansion of the pupil of image bearing light in the x-dimension and therefore vertical banding may occur in the exit pupil 56 as light is output from the waveguide at different intensities producing lighter and darker regions. A similar waveguide structure with diffraction structures embedded in the waveguide is disclosed in WO99/52002A1.

The present invention provides a display as defined in claim 1 comprising an optical waveguide in which, in operation, image-bearing light propagates therein by total internal reflection, the waveguide comprising at least first and second diffraction regions, the first diffraction region being arranged to diffract image-bearing light propagating along the waveguide so as to expand it in a first dimension and to turn the image-bearing light towards the second diffraction region, the second diffraction region being arranged to diffract the image-bearing light so as to expand it in a second dimension and to release it from the waveguide as a visible image, wherein the first diffraction region is formed by first diffraction grating embedded within the waveguide, arranged to present a substantially similar profile to the image-bearing light when incident upon the grating from a given angle above or below the grating such that the polarisation of the image bearing light is rotated by substantially similar amounts, but in opposite directions, by successive interactions with the first diffraction region, thereby increasing the uniformity of intensity of the visible image released from the waveguide.

The image bearing light turned towards the second diffraction region following an even number of interactions with the first diffraction region may have substantially the same polarisation. Additionally or alternatively, the image bearing light turned towards the second diffraction region following an odd number of interactions with the first diffraction region may have substantially the same polarisation.

The grating profile may be symmetrical with respect to a plane extending normally to the waveguide and spaced from a first and from a second principle surfaces of the waveguide by different amounts.

The first diffraction region may have a periodic square wave, sinusoidal or triangular profile.

The invention also provides a helmet-mounted, head-mounted, head-up or other display device comprising such an optical waveguide.

The invention now will be described merely by way of example with reference to the accompanying drawings wherein;
Figure 1 shows an optical waveguide;
Figure 2 shows a diffraction region of the optical waveguide;
Figure 3 shows a display device comprising the optical waveguide;
Figure 4 shows a prior art optical waveguide; and
Figure 5 shows a diffraction region of the prior art waveguide.

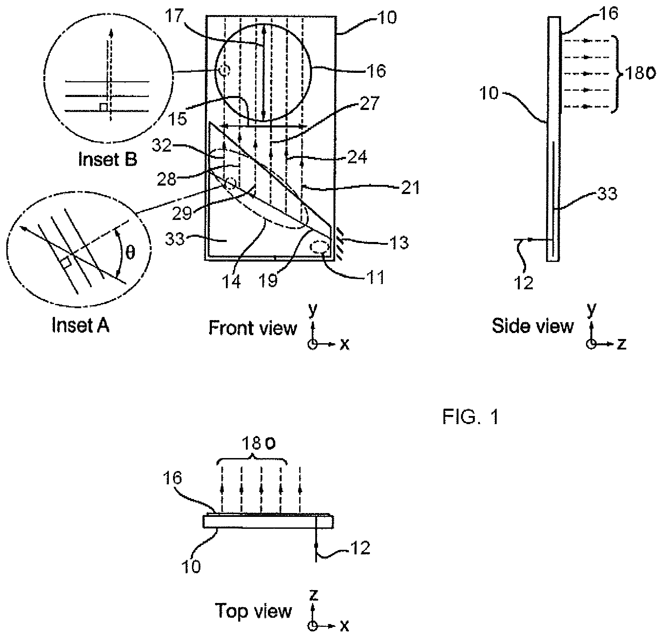

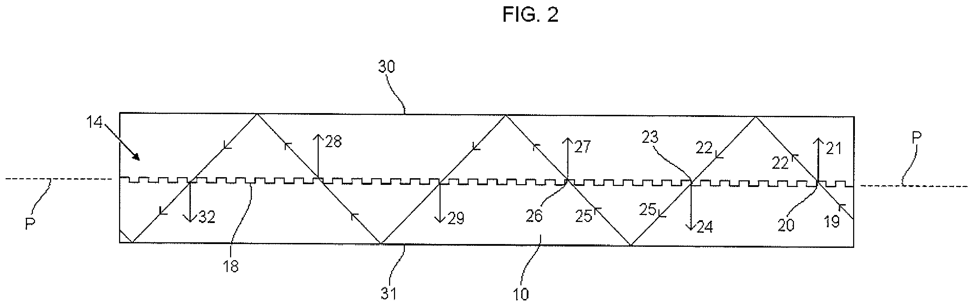

Referring to Figures 1 and 2, an optical waveguide 10 is shown having a number of features in common with the prior art waveguide described above with reference to Figures 4 and 5 and shown in WO2010/119240. For brevity, the description of the present embodiment will concentrate predominantly on the inventive differences between the prior art waveguide shown in figures 4 and 5 and that of the present invention, in particular the arrangement of the turning diffraction region (region 48 in Figure 4).

The waveguide 10 comprises an input diffraction region 11 for coupling an input pupil 12 of image-bearing light into the waveguide 10 for propagation by total internal reflection. The input pupil 12 is directed towards a reflective surface 13, where it is reflected towards a turning diffraction region 14. The turning diffraction region 14 expands the pupil of image-bearing light in a first dimension 15 through multiple interactions with the region 14 and turns it towards an output diffraction region 16. The output diffraction region 16 expands the pupil of image-bearing light in a second dimension 17 and outputs it from the waveguide as an exit pupil 180. The reflecting surface 13 may be omitted as described above.

In Figure 2, a section is taken through the waveguide showing a diffraction grating 18 used to implement the turning diffraction region 14 in more detail. The profile of the grating 18 is arranged to present the same profile to light approaching the grating 18 from any given angle either above or below the plane P of the waveguide. The profile of the grating 18 may for example be a square-wave profile as shown in Figure 2, or a sinusoidal or triangular profile. Such regular, periodic grating profiles share the property of being symmetric about a plane normal to the plane P of the waveguide 10. However, the periodicity of the profile may be varied across the grating 18 while still retaining the property of presenting the same profile to light approaching the grating 18 from a given angle either above or below the plane P of the waveguide.

The grating 18 is embedded within the waveguide 10, unlike in the prior art waveguide of Figure 4 and Figure 5 in which the gratings are formed on a surface of the waveguide. The grating 18 may extend in any plane P of the waveguide 10 although, in the present example it is off-set from a plane which is equally spaced between the principal surfaces 30, 31 of the waveguide 10. The off-set is sufficient to improve pupil banding and uniformity. The embedded arrangement of the grating 18 results a greater number of Interactions between the light and the grating 18 than would be possible with a surface-formed grating.

A chief input ray 19 is directed towards the grating 18 of the turning diffraction region 14 from the input diffraction region 11 (not shown in Figure 2), whether or not via a reflecting surface 13. The input ray 19 has a first angle of polarisation. At a first interaction 20 with the grating 18, a portion 21 of the light is directed towards the output diffraction region 16 (not shown in Figure 2) and a portion 22 of the light continues to propagate along the grating 18. At the first interaction 20, the angle of polarisation of both the portions 21, 22 is rotated in one direction, for example a clockwise direction, and therefore the angles of polarisation of light rays 21, 22 are different from that of the input ray 19.

At a second interaction 23 with the grating 18, a portion 24 of the propagating ray 22 is directed towards the output diffraction region 16 and a portion 25 of the light continues to propagate along the grating 18. At the second interaction 23, the angle of polarisation of both the portions 24, 25 is rotated in an opposite direction, for example an anti-clockwise direction. The second interaction 23 causes the angle of polarisation of the light to be rotated by an equal and opposite amount to the rotation caused by the first interaction 20. Consequently, the angle of polarisation of rays, 24, 25 is typically the same or substantially the same as the angle of polarisation of the input ray 19. Accordingly, the angle of polarisation of the propagating chief ray 25 has therefore returned substantially to the original angle of polarisation of the input ray 19.

It will be seen therefore that successive interactions with the grating 18 cause opposite rotation of the angle of polarisation of both the diffracted rays and the propagating rays. In this way, after an odd number of interactions with the turning grating 18 the angles of polarisation of the diffracted light and the propagating light are rotated compared to the angle of polarisation of the input ray 19 and after an even number of interactions with the turning grating 18 the angles of polarisation of the diffracted light and the propagating light are generally similar or the same as the angle of polarisation of the input ray 19. That is, the rays 21, 27, 28 diffracted towards the output region 16 have a generally uniform first angle of polarisation and the rays 24, 29, 32 diffracted towards the output region 16 have a generally uniform second angle of polarisation. The output diffraction region 16 is sensitive to polarisation and therefore will typically diffract one set of rays (either the odd rays 21, 27, 28 or the even rays 24, 29, 32) more efficiently than the other set of rays. However, unlike the prior art arrangement described above where the angles of polarisation of the diffracted rays 66, 72, 78 are different from one another, in the present invention the angles of polarisation of the even rays are uniform and the angles of polarisation of the odd rays are uniform and therefore the intensity of the image (at least in the X-dimension) output to a viewer will be generally uniform, even though one set of rays is diffracted less efficiently.

It should further be noted that the chief rays of the arrangement have been described in relation to Figures 1 and 2. The chief rays 21, 24, 27, 28, 29, 32 are shown in Figure 1 extending across the X-dimension 15. On first appearance therefore it would seem that the difference in polarisation of the odd and even rays would give rise to banding due to differing diffraction efficiency of the output region 16. However, it must be appreciated that in addition to the chief rays there will be dispersion of light such that rays diffracted from the turning grating will tend to overlap and eliminate any banding.

Referring to Figure 1, the input diffraction region 11 and the turning diffraction region 14 may be formed by a single grating 33 which is embedded within the waveguide 10. A single grating 33 has advantages from a manufacturing perspective in that the grating 33 can be formed in one manufacturing step, enabling the fringes of the input region 11 to be more accurately aligned with respect to the fringes of the turning region 14. Alternatively, the input region 11 and the turning region 14 may be formed by separate gratings and in this case the reflective surface 13 is not required. For example, this latter arrangement may be preferred if a requirement of the optical system is that the input region is formed by a surface grating. In a still further arrangement the turning region 14 and the output region 16 may be formed by a single embedded grating and in this case a reflective surface is required and is located on an optical path between the turning region 14 and the output region 16 as described in greater detail in the present applicant's earlier application referenced above.

The profile of the grating 18 used to implement the turning region 14 may be formed by conventional means which will be apparent to those skilled in the relevant art, for example by etching or by holography.

A suitable embedded grating can for example be created as described in the present applicant's earlier patent application WO 2010/122330. In one example a suitable profile would be created on the surface of a glass substrate by optical replication from a suitable master profile. The surface would be coated with at least one layer of dielectric material such as titanium dioxide, silicon dioxide or magnesium oxide. A second glass substrate would then be laminated over the coated surface using a suitable optical adhesive. One example design would use N-BK7 glass and a cement of matching refractive index, a square wave grating profile of 435nm period and 50nm depth with a titanium dioxide coating of between 25nm and 50nm thickness.

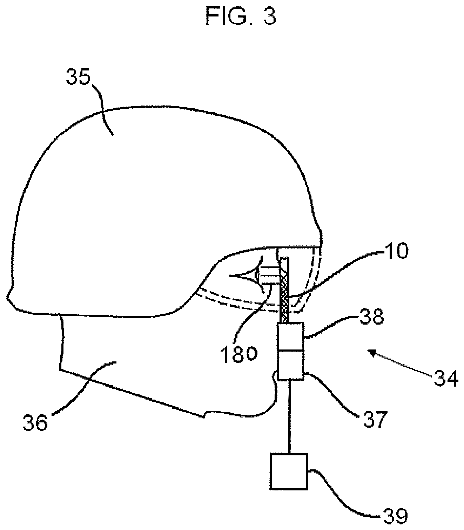

The optical waveguide 10 described with reference to Figures 1 and 2 may form part of head-up display, a head or helmet mounted display or other display device. By way of example, a helmet mounted display 34 is shown in Figure 3 mounted to a helmet 35 worn by a viewer 36. A light source 37 illuminates a micro projector 38 for injecting image bearing light into the waveguide 10 in accordance with image data supplied by an image processor 39. An image is propagated through the waveguide 10 and diffracted out to the user's eye as a visible image 180 with uniform intensity.

## Claims

1. A display device, comprising:
an optical waveguide (10); and
a diffraction grating (18) embedded within the optical waveguide (10), the diffraction grating (18) configured to cause a first angle of polarization of light interacting with the diffraction grating from below the diffraction grating to rotate in a first direction and by a first amount, the diffraction grating (18) further configured to cause a second angle of polarization of light interacting with the diffraction grating from above the diffraction grating to rotate in a second direction opposite to the first direction and by a second amount approximately equal to the first amount, such that the polarization of the light is substantially unchanged after the light has interacted with the diffraction grating from below the diffraction grating and subsequently from above the diffraction grating via total internal reflection within the optical waveguide (10),
wherein the optical waveguide (10) includes at least a first diffraction region (14) formed by the diffraction grating (18) and a second diffraction region (16),
wherein, in operation, the first diffraction region (14) is arranged to diffract image-bearing light propagating along the optical waveguide (10) so as to expand the image-bearing light in a first dimension (15) and to turn the image-bearing light towards the second diffraction region (16), the second diffraction region (16) being arranged to diffract the image-bearing light so as to expand it in a second dimension (17) and to release it from the optical waveguide (10) as a visible image,
wherein the diffraction grating (18) is configured to present a substantially similar profile to light interacting with the diffraction grating (18) from below the diffraction grating (18) as to light interacting with the diffraction grating (18) from above the diffraction grating (18),
wherein the display further comprises an input-diffraction region (11) to couple an input pupil (12) of the image-bearing light into the optical waveguide (10), and
wherein the display device further comprises a reflective surface (13) configured to reflect the input pupil (12) towards the diffraction grating (18).

2. The display device of any one of the preceding claims, wherein, in operation, the diffraction grating is configured such that, after an odd number of interactions with the diffraction grating, the angle of polarization of light within the optical waveguide is rotated compared to the angle of polarization of the input ray, and after an even number of interactions with the diffraction grating, the angle of polarization of the light within the optical waveguide is approximately the same as the angle of polarization of the input ray.

3. The display device of any one of claims 1 or 2, wherein the profile of the first diffraction region is substantially symmetrical about a plane extending normally to the optical waveguide, the first diffraction region being spaced from a first principal surface (30) and from a second principal surface (31) of the optical waveguide by different amounts.

4. The display device of any one of claim 1 to claim 3, wherein the first diffraction region has a profile that is one of a periodic square profile, a sinusoidal profile, and a triangular profile.

5. The display device of any one of claim 1 to claim 4, wherein the cross-section of the profile of the first diffraction region is periodic with the property of being symmetric about a plane normal to the optical waveguide.

6. The display device of any one of claim 1 to claim 5, wherein, in operation, at each successive interaction with a successive portion of the image-bearing light with the first diffraction region, the first diffraction region is configured to:
diffract a further portion of the successive portion such that a polarization angle of one of the further portions is rotated relative to a plane (P) of the optical waveguide to direct the further portion toward the second diffraction region, and diffract another further portion of the successive portion such that a polarization angle of the another further portion is rotated relative to the plane of the optical waveguide to propagate the another further portion along the first diffraction region.

7. The display device of any one of any one of the preceding claims, wherein the display device is configured to be mounted to one of a helmet, a head-mounted device, a head-up device, and any other device.

## Patentansprüche

1. Anzeigevorrichtung, umfassend:
einen optischen Wellenleiter (10); und
ein Beugungsgitter (18), das innerhalb des optischen Wellenleiters (10) eingebettet ist, wobei das Beugungsgitter (18) so konfiguriert ist, dass es bewirkt, dass sich ein erster Polarisationswinkel von Licht, das mit dem Beugungsgitter von unterhalb des Beugungsgitters wechselwirkt, in einer ersten Richtung und um einen ersten Betrag dreht, wobei das Beugungsgitter (18)
weiter so konfiguriert ist, dass es
bewirkt, dass sich ein zweiter Polarisationswinkel von Licht, das mit dem Beugungsgitter von oberhalb des Beugungsgitters wechselwirkt, in einer zweiten Richtung, die der ersten Richtung entgegengesetzt ist, und um einen zweiten Betrag dreht, der ungefähr gleich dem ersten Betrag ist, sodass die Polarisation des Lichts im Wesentlichen unverändert ist, nachdem das Licht mit dem Beugungsgitter von unterhalb des Beugungsgitters und anschließend von oberhalb des Beugungsgitters über innere Totalreflexion innerhalb des optischen Wellenleiters (10) wechselgewirkt hat,
wobei der optische Wellenleiter (10) mindestens einen ersten Beugungsbereich (14), der durch das Beugungsgitter (18) gebildet ist, und einen zweiten Beugungsbereich (16) enthält,
wobei im Betrieb der erste Beugungsbereich (14) so angeordnet ist, dass er bildtragendes Licht, das sich entlang des optischen Wellenleiters (10) ausbreitet, so beugt, dass es das bildtragende Licht in einer ersten Dimension (15) ausdehnt und das bildtragende Licht zu dem zweiten Beugungsbereich (16) hinwendet, wobei der zweite Beugungsbereich (16) so angeordnet ist, dass er das bildtragende Licht so beugt, dass er es in einer zweiten Dimension (17) ausdehnt und es aus dem optischen Wellenleiter (10) als sichtbares Bild freigibt,
wobei das Beugungsgitter (18) so konfiguriert ist, dass es Licht, das mit dem Beugungsgitter (18) von unterhalb des Beugungsgitters (18) wechselwirkt, ein im Wesentlichen ähnliches Profil präsentiert wie Licht, das mit dem Beugungsgitter (18) von oberhalb des Beugungsgitters (18) wechselwirkt,
wobei die Anzeige ferner einen Eingangsbeugungsbereich (11) umfasst, um eine Eingangspupille (12) des bildtragenden Lichts in den optischen Wellenleiter (10) einzukoppeln, und
wobei die Anzeigevorrichtung ferner eine reflektierende Oberfläche (13) umfasst, die so konfiguriert ist, dass sie die Eingangspupille (12) zu dem Beugungsgitter (18) hin reflektiert.

2. Anzeigevorrichtung nach einem der vorstehenden Ansprüche, wobei im Betrieb das Beugungsgitter so konfiguriert ist, dass nach einer ungeraden Anzahl von Wechselwirkungen mit dem Beugungsgitter der Polarisationswinkel von Licht innerhalb des optischen Wellenleiters gegenüber dem Polarisationswinkel des Eingangsstrahls gedreht ist und nach einer geraden Anzahl von Wechselwirkungen mit dem Beugungsgitter der Polarisationswinkel des Lichts innerhalb des optischen Wellenleiters ungefähr gleich dem Polarisationswinkel des Eingangsstrahls ist.

3. Anzeigevorrichtung nach einem der Ansprüche 1 oder 2, wobei das Profil des ersten Beugungsbereichs im Wesentlichen symmetrisch über eine Ebene ist, die sich senkrecht zu dem optischen Wellenleiter erstreckt, wobei der erste Beugungsbereich von einer ersten Hauptfläche (30) und von einer zweiten Hauptfläche (31) des optischen Wellenleiters um unterschiedliche Maße beabstandet ist.

4. Anzeigevorrichtung nach einem von Anspruch 1 bis Anspruch 3, wobei der erste Beugungsbereich ein Profil aufweist, das eines von einem periodischen rechteckigen Profil, einem sinusförmigen Profil und einem dreieckigen Profil ist.

5. Anzeigevorrichtung nach einem von Anspruch 1 bis Anspruch 4, wobei der Querschnitt des Profils des ersten Beugungsbereichs periodisch ist, mit der Eigenschaft, symmetrisch über eine Ebene senkrecht zu dem optischen Wellenleiter zu sein.

6. Anzeigevorrichtung nach einem von Anspruch 1 bis Anspruch 5, wobei im Betrieb bei jeder nachfolgenden Wechselwirkung mit einem nachfolgenden Teil des bildtragenden Lichts mit dem ersten Beugungsbereich der erste Beugungsbereich zu Folgendem konfiguriert ist:
einen weiteren Teil des nachfolgenden Teils so zu beugen, dass ein Polarisationswinkel eines der weiteren Teile in Bezug auf eine Ebene (P) des optischen Wellenleiters gedreht wird, um den weiteren Teil zu dem zweiten Beugungsbereich hinzuleiten, und einen anderen weiteren Teil des nachfolgenden Teils so zu beugen, dass ein Polarisationswinkel des anderen weiteren Teils in Bezug auf die Ebene des optischen Wellenleiters gedreht wird, um den anderen weiteren Teil entlang des ersten Beugungsbereichs auszubreiten.

7. Anzeigevorrichtung nach einem der vorstehenden Ansprüche, wobei die Anzeigevorrichtung so konfiguriert ist, dass sie an einem von einem Helm, einer am Kopf montierten Vorrichtung, einer Head-up-Vorrichtung und jeder anderen Vorrichtung montiert wird.

## Revendications

1. Dispositif d'affichage, comprenant :
un guide d'onde optique (10) ; et
un réseau de diffraction (18) intégré à l'intérieur du guide d'onde optique (10), le réseau de diffraction (18) étant configuré pour provoquer la rotation, dans une première direction et d'une première quantité, d'un premier angle de polarisation de la lumière interagissant avec le réseau de diffraction depuis le dessous du réseau de diffraction, le réseau de diffraction (18)
étant configuré en outre pour
provoquer la rotation, dans une seconde direction opposée à la première direction et d'une seconde quantité approximativement égale à la première quantité, d'un second angle de polarisation de la lumière interagissant avec le réseau de diffraction depuis le dessus du réseau de diffraction, de telle sorte que la polarisation de la lumière reste substantiellement inchangée après que la lumière a interagi avec le réseau de diffraction depuis le dessous du réseau de diffraction et subséquemment depuis le dessus du réseau de diffraction par le biais de la réflexion interne totale à l'intérieur du guide d'onde optique (10),
dans lequel le guide d'onde optique (10) comporte au moins une première région de diffraction (14) formée par le réseau de diffraction (18) et une seconde région de diffraction (16),
dans lequel, en fonctionnement, la première région de diffraction (14) est agencée pour diffracter une lumière porteuse d'image se propageant le long du guide d'onde optique (10) de sorte à agrandir la lumière porteuse d'image dans une première dimension (15) et à tourner la lumière porteuse d'image vers la seconde région de diffraction (16), la seconde région de diffraction (16) étant agencée pour diffracter la lumière porteuse d'image de sorte à l'agrandir dans une seconde dimension (17) et à la libérer du guide d'onde optique (10) en tant qu'image visible,
dans lequel le réseau de diffraction (18) est configuré pour présenter un profil sensiblement similaire pour la lumière interagissant avec le réseau de diffraction (18) depuis le dessous du réseau de diffraction (18) et pour la lumière interagissant avec le réseau de diffraction (18) depuis le dessus du réseau de diffraction (18),
dans lequel l'affichage comprend en outre une région de diffraction d'entrée (11) destinée à injecter une pupille d'entrée (12) de la lumière porteuse d'image dans le guide d'onde optique (10), et
dans lequel le dispositif d'affichage comprend en outre une surface réfléchissante (13) configurée pour réfléchir la pupille d'entrée (12) vers le réseau de diffraction (18).

2. Dispositif d'affichage selon l'une quelconque des revendications précédentes, dans lequel, en fonctionnement, le réseau de diffraction est configuré de telle sorte que, après un nombre impair d'interactions avec le réseau de diffraction, l'angle de polarisation de la lumière à l'intérieur du guide d'onde optique est tourné par rapport à l'angle de polarisation du rayon d'entrée, et après un nombre pair d'interactions avec le réseau de diffraction, l'angle de polarisation de la lumière à l'intérieur du guide d'onde optique est approximativement le même que l'angle de polarisation du rayon d'entrée.

3. Dispositif d'affichage selon l'une quelconque des revendications 1 ou 2, dans lequel le profil de la première région de diffraction est substantiellement symétrique autour d'un plan s'étendant normalement au guide d'onde optique, la première région de diffraction étant espacée d'une première surface principale (30) et d'une seconde surface principale (31) du guide d'onde optique de quantités différentes.

4. Dispositif d'affichage selon l'une quelconque des revendications 1 à 3, dans lequel la première région de diffraction présente un profil qui est l'un parmi un profil carré périodique, un profil sinusoïdal et un profil triangulaire.

5. Dispositif d'affichage selon l'une quelconque des revendications 1 à 4, dans lequel la section transversale du profil de la première région de diffraction est périodique et présente la propriété d'être symétrique autour d'un plan normal au guide d'onde optique.

6. Dispositif d'affichage selon l'une quelconque des revendications 1 à 5, dans lequel, en fonctionnement, lors de chaque interaction successive avec une partie successive de la lumière porteuse d'image avec la première région de diffraction, la première région de diffraction est configurée pour :
diffracter une partie supplémentaire de la partie successive de telle sorte qu'un angle de polarisation de l'une des parties supplémentaires soit mis en rotation par rapport à un plan (P) du guide d'onde optique pour diriger la partie supplémentaire vers la seconde région de diffraction, et diffracter une autre partie supplémentaire de la partie successive de telle sorte qu'un angle de polarisation de l'autre partie supplémentaire soit mis en rotation par rapport au plan du guide d'onde optique pour propager l'autre partie supplémentaire le long de la première région de diffraction.

7. Dispositif d'affichage selon l'une quelconque des revendications précédentes, dans lequel ledit dispositif d'affichage est configuré pour être monté sur l'un parmi un casque, un dispositif monté sur une tête, un dispositif d'affichage tête haute, et un quelconque autre dispositif.
